# EUROPEAN PATENT APPLICATION

(11) **EP 3 530 455 A1**
(43) Date of publication of application: **28.08.2019**
(21) Application number: 17861889.8
(22) Date of filing: 17.10.2017
(51) Int. Cl.: B32B 15/01, B22D 11/00

(54) **METHOD FOR OBTAINING A SANDWICH PANEL WITH ALUMINIUM FOAM IN THE CORE, INSTALLATION AND PRODUCT OBTAINED**

(30) Priority: 20.10.2016 ES 201631354
(71) Applicant: Alucoil S.A., 09200 Miranda de Ebro / Burgos (ES)
(72) Inventor: GONZALEZ SOLER, Clemente, 09200 Miranda De Ebro / Burgos (ES)
(74) Representative: Elosegui de la Pena, Inigo
(86) International application number: PCT/ES2017/070683
(87) International publication number: WO 2018/073471

(57) **Abstract**

The method starts from the use of aluminium melted in one or more ovens (1, 1'), such that the melted aluminium is poured into a type of tank (2) wherein the same is subjected to a step of injecting a gas, generating an aluminium foam that is extracted in continuous sheet form, with pre-established width and thickness, determining the panel core. Plates (10) are continuously applied to said core, on the respective upper and lower faces, said plates having an external face based exclusively on aluminium and an internal face intended to come into contact with the panel core, of an alloy of aluminium and silicon, the alloy being pre-heated to its melting temperature for securing to the corresponding face of the core by means of metallurgical welding, the panel subsequently being cooled on cooling belts (15), to be cut to the desired length. In this way, a continuous panel is obtained, that is to say that the size of the installation does not affect the size of the panels that it is finally desired to obtain. Furthermore, a process and product that are much more economical than others currently known, are involved.

## Description

### OBJECT OF THE INVENTION

The present invention relates to a method for obtaining a sandwich-type panel, of aluminium, specifically of a panel wherein there participate two outer sheets of aluminium alloys, of reduced thickness, and an intermediate core, of majority thickness, obtained based on aluminium foam with a density considerably less than that of the outer sheets and with a high degree of porosity.

The object of the invention is to achieve a continuous and economical process, which minimizes the necessary costs for obtaining the final panels, without impairment of the physical properties that this type of panels require, obtaining financial savings in the order of 30% compared with other industrial processes and without limitations in the length of the parts obtained.

The invention affects both the manufacturing method and the installation used in said process, and the panel finally obtained.

### BACKGROUND OF THE INVENTION

Aluminium foam has been known for many years, but the difficulties in obtaining it have very considerably limited its industrialization, i.e. its practical use on an industrial level.

There are two methods for obtaining aluminium foam, one starts from melted aluminium whereto gas is applied as an expansion agent and additives, and another, recently, wherein aluminium powder is used, it starts from a homogeneous mixture of said aluminium with an expansion agent, such as, for example, titanium hydride, and the mixture is compacted.

In both cases, the manufacturing costs are very high, so that production is greatly reduced and centred only on special applications.

This cost level is determined by the impossibility to manufacture the continuous panels and in large-dimensioned formats.

Attempting to overcome this problem, the applicant is holder of the Spanish Invention Patent P200501536, wherein it discloses a method for manufacturing sandwich panels, wherein to obtain the panel core, it starts from aluminium powder mixed with a foaming product, such that said mixture is densified by compacting and heat consolidation obtaining a plate which is first hot rolled and then cold rolled, until obtaining a precursor which, fragmented, is introduced in a foam oven, wherein outer sheets of aluminium also penetrate, each one of them composed of two layers of different thickness and different alloys, such that the interior has a lower melting temperature than the exterior.

The foaming of the precursor occurs in the oven between said sheets, generating the foam core which is joined to the sheets by welding or metallurgical joining, which undergoes a cooling and stabilization step.

Although high quality panels are obtained using the described method, it has manufacturing costs that it would be desirable to reduce, to which it is necessary to add that it is quite a complex installation, in addition to the fact that the process is really not totally continuous, since once the precursor is obtained this is fragmented to be introduced in a foam oven, so that the panels obtained will be limited to the size of the oven, with the limitations or high cost of the necessary installations when the panels to be obtained are of considerable length.

### DESCRIPTION OF THE INVENTION

The method claimed resolves in a fully satisfactory manner the aforementioned problem in each and every one of the aspects commented, based on a much simpler installation, which allows obtaining continuous panels of the required length and with financial savings in the order of 30% compared with the method disclosed in invention patent P200501536.

Therefore, and more specifically, instead of starting from aluminium powder mixed with a foaming agent, the method of the invention starts from aluminium melted in an oven, mixed with silicon carbide or any other material that increases its viscosity, which is introduced in a type of tank from which a gas is internally injected, preferably air, such that the mixture of melted metal with the gas tends to float, to be extracted at the top in the form of a continuous sheet, with a pre-established thickness, whereto respective plates are secured by its upper and lower face, respectively, by metallurgical welding, which are applied by heated rollers on its surface, plates that are supplied from an unwinder and the surface area of which intended to come into contact with the aluminium foam core is pre-heated through the corresponding ovens.

More specifically, the plates that form the end walls of the sandwich-type panel to be obtained, have a configuration wherein an external face is defined, based exclusively on aluminium, and an internal face, that intended to come into contact with the panel core, a mixture of aluminium and silicon.

In this way, as the internal face has a lower melting point than the external face, the plates can be heated by their internal face via the aforementioned ovens until their melting temperature without the risk that the external face thereof is affected, since its melting temperature is higher, so that these plates are unwinded, they are heated and they are applied by the pair of heated rollers described above so that a sandwich-type panel is obtained in said method wherein the end layers are firmly secured to the aluminium foam core by metallurgical welding, making the product produced continuously pass through cooling belts to subsequently be cut into sheets at the measurements required by a shear, and transported by the corresponding conveyer belt to the corresponding stacking and storage system.

The invention equally affects the end product obtained, since although the panel may have a similar appearance to that anticipated in the invention patent P200501536, it is necessary to highlight that in said patent, in order to obtain it, it starts from aluminium powder and a titanium-based foam, so that the end composition of the panel core is different in one and another case, such that the panel core obtained in the present invention completely lacks any residues of titanium it its composition.

This achieves a panel which is cheaper to obtain, with a simpler installation, and which as it is continuously obtained, can be cut to the desired length without any limitation in said regard.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

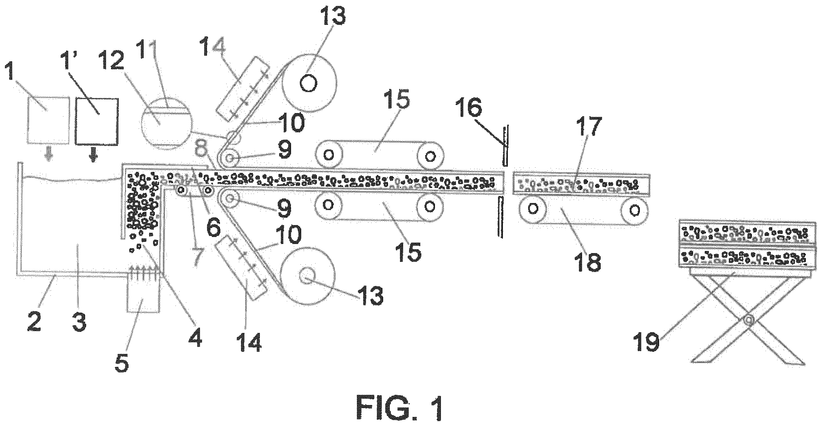

Figure 1 - Shows the schematic view of the installation necessary for the putting into practice of the method for obtaining an aluminium sandwich panel in accordance with the object of the present invention.

### PREFERRED EMBODIMENT OF THE INVENTION

In light of the indicated figure, it can be observed how the method of the invention is based on an installation wherein one or more ovens (1-1') are established, wherein aluminium is melted, or aluminium with silicon carbide or any other material that increases its viscosity, ovens that pour the aluminium melted at a temperature in the order of 700 °C into a type of tank (2), wherein a first chamber (3) is defined, whereto the melted aluminium accesses, connected to a second chamber (4) in which base is established a gas injector (S), preferably air, which forms a plurality of bubbles inside the aluminium, which tend to rise, creating the foam core sought for the panel, defining in the upper area of said tank (2) an outlet or overflow (8), assisted by a conveyer belt (7) wherein the aluminium foam core that is going to participate in the panel to obtain is continuously produced, being able to adjust the thickness of the exiting sheet between 6 and 40 mm, obtaining a continuous belt (8) with a width in the order of 1600 mm at a temperature in the order of 540 °C.

Said continuous belt (8) forming the panel's foam core is made to pass over a pair of heated rollers (9) which in turn apply a plate (10) to the upper and lower faces of said core (10) with a thickness in the order of 0.7 mm, wherein an external and majority face (12) is defined in the order of 0.8 mm, which will define the external face of the panel, based on aluminium, and an internal face (11), of less thickness, in the order of 0.1 mm, based on aluminium and silicon, which has a melting point lower than the external face (12).

The plates (10) are continuously supplied through respective unwinders (13), making their internal face (11) pass through an oven (14), which heats it to a temperature in the order of 559-580 °C, such that said internal face reaches the melting temperature, without the majority and external layer (12) being affected, with a melting point that is slightly higher.

In this way, the heated rollers (9) apply the plates (10) to the aluminium foam core which constitutes the continuous belt (8), performing a securing by metallurgical welding due to the temperature at which the different components are at when they are joined together.

Consequently, a sandwich-type panel is obtained at the outlet of the heated rollers (9) wherein an aluminium foam core participates, and two end and sheet layers essentially of aluminium, a panel which will be at a temperature in the order of 500 °C, so that it must be duly cooled progressively, making it pass through cooling belts (15) until reaching a temperature in the order of 200 °C, to be deposited on the area of made-to-measure cutting, by shears (16) or suitable machinery, such that at the outlet of this machinery a final panel (17) is obtained of the required dimensions, which, through a series of conveyer belts (18) and a stacking system (19), the product is finally stored with its later distribution.

The continuous process thus described will allow a panel production at a rate in the order of 1.5 metres per minute.

## Claims

1. Method for obtaining a sandwich panel with aluminium foam in the core, which starting from the aluminium melting process in one or more ovens, the melted aluminium poured into a type of tank in which the same is subjected to a step of injecting with a gas, generating an aluminium foam that is extracted in continuous sheet form, with a pre-established width and thickness, determining the panel core, **characterized in that** it consists of continuous application on the upper and lower faces of said aluminium foam core of respective plates of plated material wherein an external face is defined based exclusively on aluminium, and an internal face, intended to come into contact with the panel core, an alloy of aluminium and silicon, plates of plated material that after application to the foam core are heated by their internal face until their melting temperature, a melting temperature which is lower than that of the outer face of said plates, for securing to the corresponding face of the core by means of metallurgical welding, after which the panel continuously obtained is cooled and its made-to-measure cutting and stacking/storing thereof.

2. Method, according to claim 1, wherein subsequent to the melting step of the aluminium in the corresponding ovens, silicon carbide or any other material that increases its viscosity is added thereto.

3. Installation for obtaining a sandwich panel with aluminium foam in the core, **characterized in that** one or more ovens (i) for melting aluminium which discharge into a type of tank (2) participate therein, wherein a first chamber (3) is defined, whereto the melted aluminium accesses, connected to a second chamber (4) in the base whereof is established a gas injector (5), a tank (2) which has an outlet or overflow (6) of the aluminium foam in sheet form, assisted by a conveyer belt (7), which leads to a pair of heated rollers (9) whereon respective plates (10) run, continuously supplied through respective unwinders (13), establishing different heating ovens (14) for heating said surface between heated rollers (9) and the unwinders (13), in correspondence with what will be the internal face of the plates (10); with the special characteristic that cooling belts (15) of the continuous panel obtained are established at the outlet of the heated rollers (9), at which outlet the corresponding means of cutting (16), stacking and storage (19) are disposed.

4. Sandwich panel with aluminium foam in the core, **characterized in that** it has a three-layer structure, wherein a foam core obtained based on melted aluminium is defined, and two end layers, based on plated material, wherein an external and majority face is defined based on aluminium, and an internal face based on an alloy of aluminium and silicon.
